# EUROPEAN PATENT SPECIFICATION

(11) **EP 4 219 112 B1**
(45) Date of publication and mention of the grant of the patent: **04.09.2024**
(21) Application number: 23154441.2
(22) Date of filing: 01.02.2023
(51) Int. Cl.: B29B 7/24, B29B 7/28, B29B 7/74, B29B 7/82, B29B 7/86, B29B 13/06, B29C 45/18, B29B 7/14, B29B 7/16, B29B 7/60, B29C 45/00, F26B 3/06, B29L 31/50

(54) **PRODUCTION APPARATUS FOR POLYMER-BASED ARTICLES**
VORRICHTUNG ZUR HERSTELLUNG VON GEGENSTÄNDEN AUF POLYMERBASIS
APPAREIL DE PRODUCTION D'ARTICLES À BASE DE POLYMÈRE

(30) Priority: 01.02.2022 IT 202200000380 U
(43) Date of publication of application: 02.08.2023
(73) Proprietor: Pegaso Industries S.p.A., 35010 Borgoricco (PD) (IT)
(72) Inventor: PIVA, Rinaldo, 35010 Borgoricco (PD) (IT); ZANON, Daniele, 35010 Borgoricco (PD) (IT)
(74) Representative: Susanetto, Carlo

(56) References cited:
- EP-A1- 2 447 655
- EP-A1- 3 437 822
- EP-A2- 1 923 649
- CN-U- 210 705 927
- JP-A- 2001 147 151
- US-B1- 6 203 184
- US-B1- 6 449 875

## Description

### Technical field

The present invention relates to a production apparatus for polymer-based articles which is preferably, though not exclusively, used in the field of production of footwear items or components thereof, such as, for example, the soles.

### Technological background

In the technical field set out above, it is widely known to produce articles made from polymer material using suitable transforming machines which provide for the formation of the desired article from a polymer blend which is prepared suitably.

For example, in a commonly used method of injection-moulding, the transforming machines, which are supplied by a polymer blend in granular form, provide in a first step for bringing the polymer blend to the molten or semi-molten state, for example, inside an extruder, and then for injecting it inside a mould having the form of the desired article where it is solidified, thus obtaining the final article.

Alternatively, the polymer blend in the molten or semi-molten state can be caused to pass through an extrusion head having a predefined profile which, in this case, also confers on the molten or semi-molten material the desired shape of the article to be obtained.

These blends are configured to confer on the final product chemical/physical or mechanical characteristics which are adequate for the purposes intended for the use thereof and can provide for the combination of a consistent number of materials, including one or more polymer materials and one or more additives which can be both of an organic nature and of an inorganic nature.

In general terms, these materials can differ from each other as a result of any characteristic thereof, such as, for example, the chemical composition or the form thereof or the degree of purity thereof or the origin thereof.

By way of example, the materials to be mixed may be one or more granular polymers, a mineral filler and one or more additives, such as a stabilizing compound, an antioxidant compound or a colouring compound.

Furthermore, the polymers to be mixed may be of the same type, for example, TPU or EVA, but may have different origins, such as, for example, virgin material or recycled material or may have different characteristics, for example, in terms of Shore hardness.

The polymer blends are generally prepared in a weighing and mixing unit, where the different materials are charged in accordance with the intended quantities from a respective recipe which defines the precise relationship between the different materials of each polymer blend and are therefore mixed with each other in a virtually homogeneous manner before being supplied to the transforming machine.

CN 210705 927, US6,203,184, JP2001 147151 and EP3,437,822 each describes production apparatus known in the art.

In this context, the Applicant has observed that some materials which form the polymer blends have high hygroscopic properties and therefore tend to absorb humidity which can, during the moulding or extrusion step, lead to the formation of both structural and aesthetic defects in the final article.

In order to prevent such disadvantages, it is known to process such materials in a suitable heating and drying device before being mixed with the other components of the polymer blend and therefore being supplied to the transforming machine.

However, the Applicant has observed that this arrangement is not particularly effective and has therefore perceived the need for optimizing the configuration of the known apparatuses in order to improve the management and the overall efficiency thereof.

In the present description and the appended claims, the term "granular material" is intended to be understood to be a plurality of solid elements which are different and separate from each other, having suitable dimensions and shape in accordance with the processing to be carried out and the material used, including the powdered or flaked polymer material.

The blend is based on polymer material when at least 40% of the material of the blend is formed by one or more polymer materials, preferably at least 60%. The polymer material may be any material which is suitable for and normally used in processing operations for plastics materials. Preferably, it is a thermoplastic material, such as, for example, polyolefins, polyurethanes, polyesters, polyamides or the copolymers thereof. Preferred examples of polymer materials are ethylene vinyl acetate (EVA) copolymer and thermoplastic polyurethane (TPU).

### Description of the invention

The object of the present invention is to provide a production apparatus for polymer-based articles which is structurally and functionally configured to at least partially overcome one or more of the disadvantages set out above with reference to the cited prior art.

This object is achieved by the present invention by means of a production apparatus according to independent claim 1; further preferred embodiments are claimed in the dependent claims.

As a result of these characteristics, the apparatus of present invention advantageously allows the polymer blend which is prepared by the weighing and mixing unit to be heated shortly before it is supplied to the transforming machine, preventing the dispersion of heat and the possibility of absorbing fresh humidity before being introduced into the transforming machine.

The apparatus of present invention may have at least one of the preferred features described below.

Preferably, the weighing and mixing unit is positioned at a higher level than the supply hopper so as to allow the transfer of the polymer blend by falling from the weighing and mixing unit to the supply hopper.

More preferably, the weighing and mixing unit is positioned vertically above the supply hopper.

In this manner, the configuration of the apparatus is advantageously optimized, minimizing the overall dimensions thereof and making full use of gravitational force for moving the polymer blend between the various components thereof. In some embodiments, the supply hopper is positioned at a higher level than the transforming machine so as to allow the transfer of the polymer blend by falling from the supply hopper to the transforming machine.

More preferably, the supply hopper is positioned vertically above the transforming machine.

In some embodiments, the weighing and mixing unit is connected to a plurality of storage tanks. Preferably, each storage tank contains a respective material which forms a component of the polymer blend.

The storage tanks have suitable dimensions and are provided in suitable numbers in accordance with the polymer blends to be prepared for the production of the desired articles.

Preferably, the weighing and mixing unit is connected to each storage tank by means of a respective charging line.

Preferably, the materials are of the granular type and the charging line is configured to carry out a pneumatic transport of the materials from the storage tanks to the weighing and mixing unit.

Preferably, the weighing and mixing unit is connected to a charging line for recycled material which originates from waste of the articles.

Preferably, the weighing and mixing unit comprises a mixing hopper which is positioned downstream of the weighing hopper and which is provided with a mixing member which is configured to mix the materials which are contained in the mixing hopper.

In some embodiments, the heating circuit comprises a dehumidifying device which is configured to dehumidify the gas before it is introduced into the supply hopper.

In this manner, the polymer blend in the supply hopper is dried before being introduced into the transforming machine.

This provision is particularly advantageous if one or more materials of the polymer blend is/are hygroscopic.

The transforming machine is preferably an injection-moulding machine or an extruder.

The articles are preferably soles of footwear items.

### Brief description of the drawings

The features and advantages of the invention will be better understood from the detailed description of a preferred embodiment thereof which is illustrated by example with reference to the appended drawings, in which:

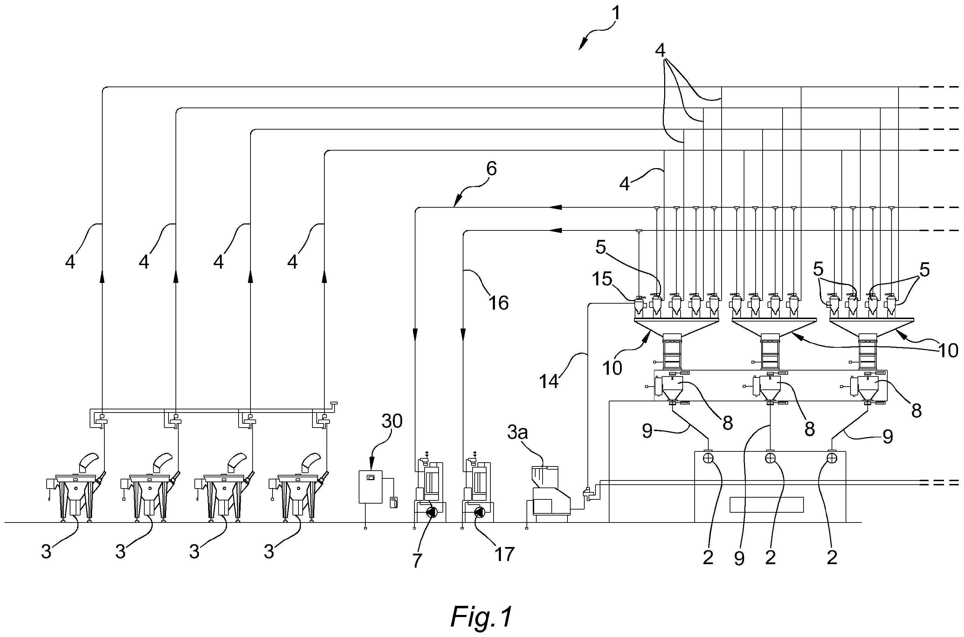

- Figure 1 is a schematic view of a production apparatus for polymer-based articles which is realized according to the present solution;

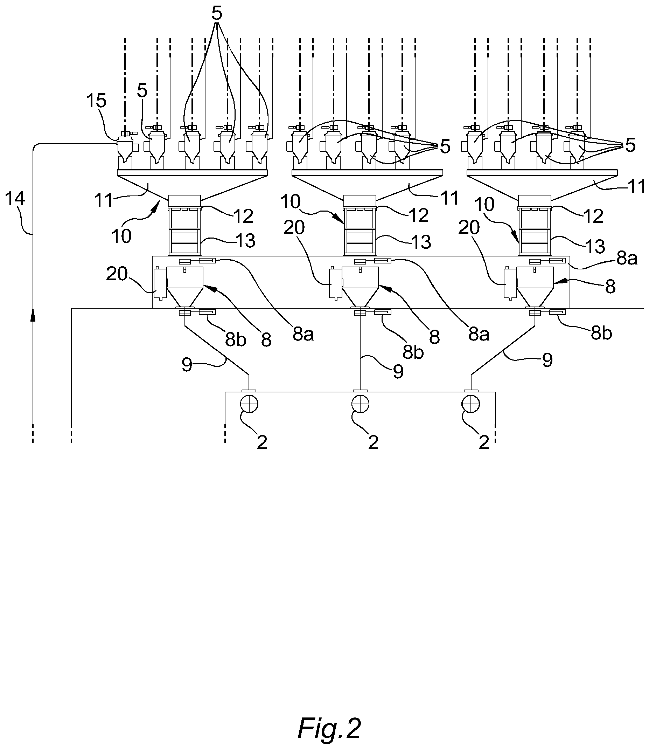

- Figure 2 is a schematic view, drawn to an enlarged scale, of a portion of the production apparatus of Figure 1.

### Preferred embodiment of the invention

With reference to the appended Figures, there is generally designated 1 a production apparatus for polymer-based articles which is realized according to the present solution.

The apparatus 1 is provided to produce soles for footwear and it is particularly provided to simultaneously produce different soles both in terms of form and dimensions and in terms of composition of the polymer blend from which they are produced.

To this end, the apparatus 1 comprises three transforming machines 2, in particular of the injection-moulding type, which operate substantially independently of each other.

As a function of the production requirements, therefore, the transforming machines 2 can produce articles from the same polymer blend having the same composition or can produce articles from polymer blends having different compositions.

Naturally, the apparatus 1 may have a different number of transforming machines 2, including only one.

Each transforming machine 2 is supplied by a respective supply hopper 8 which is positioned above the transforming machine 2 so as to supply the polymer blend to the transforming machine 2 by gravitational force through a discharge pipe 9.

The polymer blends which can be used in the transforming machines 2 are prepared from materials which are contained in suitable storage tanks 3. The storage tanks 3 may differ from one another in shape and dimensions and, in the preferred embodiment considered here, there are four of them.

The materials contained in the storage tanks 3 are of the granular type with chemical/physical characteristics which are different from each other and are, for example, granules of virgin polymer materials or recycled polymer materials or granules of additive materials.

In one or more transforming machines 2, it is further possible to use in the polymer blend granules which result from the grinding (and potential regranulation) of waste articles, which is carried out at a grinding machine 3a. In a position vertically above each supply hopper 8, there is further provided a respective weighing and mixing unit 10 which is configured to prepare a polymer blend from the materials which are contained in the storage tanks 3 or which are obtained in the grinding device 3a.

Each supply hopper is therefore interposed between a weighing and mixing unit 10, from which it is separated by means of a valve 8a, and a transforming machine 2, from which it is separated by means of a valve 8b.

The transfer of the materials which are contained in the storage tanks 3 to the different weighing and mixing units 10 is brought about by means of a first pneumatic transport circuit.

In particular, each storage tank 3 is connected to the different weighing and mixing units 10 by means of a respective charging line 4 which is provided, at the weighing and mixing unit 10, with a respective container 5 where, as a result of the provision of a filter which is positioned at the outlet of the container, the material which is transported in the charging line 4 is separated and is caused to fall into the weighing and mixing unit 10.

Downstream of the respective container 5, the charging lines 4 are all connected by means of respective shutoff valves to a first intake line 6, which is in turn connected to a first vacuum pump 7.

The apparatus 1 further comprises a second pneumatic transport circuit which is provided to transport the recycled material from the grinding machine 3a to one (or more) weighing and mixing unit(s) 10.

In particular, the second transport circuit comprises a transport line 14 which is connected to the outlet of the grinding machine 3a and which, in the region of the weighing and mixing unit 10, opens in a container 15, where the recycled material, also due to the provision of a suitable filter positioned at the outlet of the container 15, is separated from the transport gas and caused to fall into the weighing and mixing unit 10.

Downstream of the container 15, the transport line 14 is connected by means of respective shutoff valves to a second intake line 16 which is in turn connected to a second vacuum pump 17.

The weighing and mixing unit 10 is of the gravimetric type and comprises a weighing hopper 11 which is configured to receive and weigh the material which is released from time to time by one of the containers 5 and 15. To this end, the weighing hopper 11 is supported on load cells 12 so as to allow the precise measurement of the quantity of material introduced into the weighing hopper 11.

The weighing and mixing unit 10 further comprises a mixing hopper 13, which is positioned downstream of the weighing hopper 11 and which is provided with a mixing member, for example, of the type with vanes or the type with a screw, which is configured to mix in a substantially homogeneous manner the different materials which are contained in the mixing hopper 13.

Each supply hopper 8 is preferably provided with a sensor which controls the quantity of polymer blend which is present inside the supply hopper 8, for example, a level sensor.

Furthermore, each supply hopper 8 is connected to a heating and drying circuit 20 which is configured to introduce, if required, a hot and dry gas inside the supply hopper 8 in order to heat and dry the polymer blend before it is supplied to the transforming machine 2.

The heating and drying circuit 20 may be of any suitable type and, for example, may be of the type with compressed air which is dehumidified in a dehumidifying device (for example, having molecular sieves) which is brought to ambient pressure and heated in an electric heater before being introduced into the supply hopper 8.

In the discharge pipe 9 of each supply hopper 8, there may further be provided a metering device which is provided to meter one or more additives in the polymer blend being introduced into the transforming machine, for example, colourants and/or stabilizers.

The gravimetric metering device 1 further comprises a control unit 30 which is suitably programmed to receive instructions concerning the polymer blends to be composed for each transforming machine 2 and to control the operation of all the components of the apparatus 1, which operates in the manners described below.

Beforehand, there are inserted or stored in the control unit 30 the different polymer blends which can be used by the transforming machines 2 in order to obtain the soles desired and there is associated with each transforming machine 2 a polymer blend.

At this point, the control unit 30 controls the preparation of the different polymer blends in the weighing and mixing units 10 which supply each transforming machine 2.

To this end, the pneumatic transport of the individual components of the different polymer blends to the respective weighing and mixing units 10 is activated according to methods which are known per se to the person skilled in the art.

Each material is brought near the container 5 (or the container 15, if provided) and is discharged, for example, by means of suitable metering valves, into the weighing hopper 11. The material which is introduced into the weighing hopper 11 is weighed by the load cells 12 and, once the intended quantity is reached, the control unit 30 interrupts the further addition of material and controls the discharge of the contents of the weighing hopper 11 into the mixing hopper 13 underneath.

The same weighing procedure is carried out for each additional material which composes the polymer blend and which is therefore taken from the specific storage tank 3 in order to be charged in the container 5 of the respective charging line 4, weighed in the weighing hopper 11 and added to the mixing hopper 13, where it is mixed with the other materials which compose the polymer blend.

Once the formation of the polymer blend is complete, it is discharged by gravitational force into the supply hopper 8, by opening the shutoff valve 8a. Here, the polymer blend is heated and dried by the hot and dry gas which is introduced into the supply hopper 8 by the heating and drying circuit 20.

The polymer blend, once the temperature and drying conditions intended have been reached, is supplied to the transforming machine 2 by opening the shutoff valve 8b. Along the discharge pipe 9, there may further be added to the polymer blend one or more additional additives which are supplied by the metering device, if provided.

The polymer blend is therefore molten and moulded in the transforming machine 2a in order to obtain the desired article, for example, a first type of sole for footwear items.

The preparation of the polymer blends in the different weighing and mixing units 10 is carried out in a parallel manner and independently of each other.

## Claims

1. A production apparatus (1) for polymer-based articles, particularly for producing soles of footwear items, comprising:
- a weighing and mixing unit (10) which is configured to prepare at least one polymer blend;
- a supply hopper (8) which is connected to the weighing and mixing unit (10) in order to receive the at least one polymer blend from the weighing and mixing unit (10);
- a transforming machine (2) which is supplied by the supply hopper (8) and which is configured to transform the at least one polymer blend which is received from the supply hopper (8) into one of the polymer-based articles **characterised in that** the apparatus further comprising a heating circuit (20) which is connected to the supply hopper (8) and which is configured to introduce a hot gas inside the supply hopper (8) in order to heat the polymer blend and **in that** the that the weighing and mixing unit (10) comprises a weighing hopper (11) which is supported on load cells (12) and in which the materials from the storage tanks (3) are introduced, wherein the weighing and mixing unit (10) further comprises a mixing hopper (13), which is positioned downstream of the weighing hopper (11) and which is provided with a mixing member which is configured to mix in a substantially homogeneous manner the different materials which are contained in the mixing hopper (13).

2. An apparatus according to claim 1, wherein the weighing and mixing unit (10) is positioned at a higher level than the supply hopper (8) so as to allow the transfer of the polymer blend by falling from the weighing and mixing unit (10) to the supply hopper (8).

3. An apparatus according to claim 2, wherein the weighing and mixing unit (10) is positioned vertically above the supply hopper (8).

4. An apparatus according to any one of the preceding claims, wherein the supply hopper (8) is positioned at a higher level than the transforming machine (2) so as to allow the transfer of the polymer blend by falling from the supply hopper (8) to the transforming machine (2).

5. An apparatus according to any one of the preceding claims, wherein the weighing and mixing unit (10) is connected to a plurality of storage tanks (3), wherein each storage tank (3) contains a respective material which forms a component of the at least one polymer blend.

6. An apparatus according to claim 5, wherein the weighing and mixing unit (10) is connected to each storage tank (3) by means of a respective charging line (4).

7. An apparatus according to claim 6, wherein the materials are of the granular type and the charging line (4) is configured to carry out a pneumatic transport of the materials from the storage tanks (3) to the weighing and mixing unit (10).

8. An apparatus according to any one of the preceding claims, wherein the weighing and mixing unit (10) is connected to a charging line for recycled material which originates from waste of the articles.

9. An apparatus according to any one of the preceding claims, wherein the at least one heating circuit (20) comprises a dehumidifying device (22) which is configured to dehumidify the gas before it is introduced into the at least one supply hopper (8) so as to dry the polymer blend before being supplied to the transforming machine (2).

## Patentansprüche

1. Herstellungsvorrichtung (1) für polymerbasierte Artikel, insbesondere zur Herstellung von Sohlen für Schuhartikel, umfassend:
- eine Wiege- und Mischeinheit (10), die eingerichtet ist, zumindest eine Polymermischung herzustellen;
- einen Zuführtrichter (8), der mit der Wiege- und Mischeinheit (10) verbunden ist, um die zumindest eine Polymermischung von der Wiege- und Mischeinheit (10) aufzunehmen;
- eine Umwandlungsmaschine (2), die vom Zuführtrichter (8) versorgt wird und die eingerichtet ist, die zumindest eine Polymermischung, die vom Zuführtrichter (8) empfangen wird, in einen der polymerbasierten Artikel umzuwandeln,
- **dadurch gekennzeichnet, dass** die Vorrichtung ferner einen Heizkreislauf (20) aufweist, der mit dem Zuführtrichter (8) verbunden ist und der eingerichtet ist, heißes Gas in den Zuführtrichter (8) einzuleiten, um die Polymermischung zu erhitzen, und dass die Wiege- und Mischeinheit (10) einen Wiegetrichter (11) aufweist, der auf Wägezellen (12) gelagert ist und in den die Materialien aus den Vorratsbehältern (3) eingeleitet werden,
- wobei die Wiege- und Mischeinheit (10) ferner einen Mischtrichter (13) aufweist, der stromabwärts des Wiegetrichters (11) positioniert ist und der mit einem Mischelement versehen ist, das eingerichtet ist, die verschiedenen Materialien, die im Mischtrichter (13) enthalten sind, im Wesentlichen homogen zu mischen.

2. Vorrichtung nach Anspruch 1, wobei die Wiege- und Mischeinheit (10) auf einer höheren Ebene als der Zuführtrichter (8) angeordnet ist, um die Übertragung der Polymermischung durch Fallen von der Wiege- und Mischeinheit (10) in den Zuführtrichter (8) zu ermöglichen.

3. Vorrichtung nach Anspruch 2, wobei die Wiege- und Mischeinheit (10) vertikal über dem Zuführtrichter (8) positioniert ist.

4. Vorrichtung nach einem der vorhergehenden Ansprüche, wobei der Zuführtrichter (8) auf einer höheren Ebene als die Umwandlungsmaschine (2) positioniert ist, um die Übertragung der Polymermischung durch Fallen vom Zuführtrichter (8) in die Umwandlungsmaschine (2) zu ermöglichen.

5. Vorrichtung nach einem der vorhergehenden Ansprüche, wobei die Wiege- und Mischeinheit (10) mit einer Mehrzahl von Vorratsbehältern (3) verbunden ist, wobei jeder Vorratsbehälter (3) ein jeweiliges Material enthält, das eine Komponente der zumindest einen Polymermischung bildet.

6. Vorrichtung nach Anspruch 5, wobei die Wiege- und Mischeinheit (10) über eine jeweilige Beschickungsleitung (4) mit jedem Vorratsbehälter (3) verbunden ist.

7. Vorrichtung nach Anspruch 6, wobei die Materialien körnig sind und die Beschickungsleitung (4) eingerichtet ist, einen pneumatischen Transport der Materialien von den Vorratsbehältern (3) zur Wiege- und Mischeinheit (10) durchzuführen.

8. Vorrichtung nach einem der vorhergehenden Ansprüche, wobei die Wiege- und Mischeinheit (10) mit einer Beschickungsleitung für recyceltes Material verbunden ist, das aus dem Abfall der Artikel stammt.

9. Vorrichtung nach einem der vorhergehenden Ansprüche, wobei der zumindest eine Heizkreislauf (20) eine Entfeuchtungsvorrichtung (22) aufweist, die eingerichtet ist, das Gas zu entfeuchten, bevor es in den zumindest einen Zuführtrichter (8) eingeleitet wird, um die Polymermischung zu trocknen, bevor sie der Umwandlungsmaschine (2) zugeführt wird.

## Revendications

1. Appareil de production (1) pour des articles à base de polymère, particulièrement pour la production de semelles d'articles chaussants, comprenant :
- une unité de pesée et de mélange (10) qui est configurée pour préparer au moins un mélange de polymère ;
- une trémie d'alimentation (8) qui est reliée à l'unité de pesée et de mélange (10) afin de recevoir l'au moins un mélange de polymère de l'unité de pesée et de mélange (10) ;
- une machine de transformation (2) qui est fournie par la trémie d'alimentation (8) et qui est configurée pour transformer l'au moins un mélange de polymère qui est reçu de la trémie d'alimentation (8) en un des articles à base de polymère, **caractérisé en ce que** l'appareil comprend en outre un circuit de chauffage (20) qui est relié à la trémie d'alimentation (8) et qui est configuré pour introduire un gaz chaud à l'intérieur de la trémie d'alimentation (8) afin de chauffer le mélange de polymère et **en ce que** l'unité de pesée et de mélange (10) comprend une trémie de pesée (11) qui est supportée sur des cellules de charge (12) et dans laquelle les matériaux des réservoirs de stockage (3) sont introduits, dans lequel l'unité de pesée et de mélange (10) comprend en outre une trémie de mélange (13) qui est positionnée en aval de la trémie de pesée (11) et qui est dotée d'un élément de mélange qui est configuré pour mélanger de manière sensiblement homogène les différents matériaux qui sont contenus dans la trémie de mélange (13).

2. Appareil selon la revendication 1, dans lequel l'unité de pesée et de mélange (10) est positionnée à un niveau plus élevé que la trémie d'alimentation (8) de sorte à permettre le transfert du mélange de polymère par chute de l'unité de pesée et de mélange (10) dans la trémie d'alimentation (8).

3. Appareil selon la revendication 2, dans lequel l'unité de pesée et de mélange (10) est positionnée verticalement au-dessus de la trémie d'alimentation (8).

4. Appareil selon l'une quelconque des revendications précédentes, dans lequel la trémie d'alimentation (8) est positionnée à un niveau plus élevé que la machine de transformation (2) de sorte à permettre le transfert du mélange de polymère par chute de la trémie d'alimentation (8) dans la machine de transformation (2).

5. Appareil selon l'une quelconque des revendications précédentes, dans lequel l'unité de pesée et de mélange (10) est reliée à une pluralité de réservoirs de stockage (3), dans lequel chaque réservoir de stockage (3) contient un matériau respectif qui forme un composant de l'au moins un mélange de polymère.

6. Appareil selon la revendication 5, dans lequel l'unité de pesée et de mélange (10) est reliée à chaque réservoir de stockage (3) au moyen d'une ligne de charge respective (4).

7. Appareil selon la revendication 6, dans lequel les matériaux sont du type granulaire et la ligne de charge (4) est configurée pour réaliser un transport pneumatique des matériaux des réservoirs de stockage (3) à l'unité de pesée et de mélange (10).

8. Appareil selon l'une quelconque des revendications précédentes, dans lequel l'unité de pesée et de mélange (10) est reliée à une ligne de charge pour du matériau recyclé qui provient de déchets des articles.

9. Appareil selon l'une quelconque des revendications précédentes, dans lequel l'au moins un circuit de chauffage (20) comprend un dispositif de déshumidification (22) qui est configuré pour déshumidifier le gaz avant qu'il ne soit introduit dans l'au moins une trémie d'alimentation (8) de sorte à sécher le mélange de polymère avant d'être alimenté dans la machine de transformation (2).
